# FASCICULE DE BREVET EUROPEEN

(11) **EP 1 742 407 B1**
(45) Date de publication et mention de la délivrance du brevet: **19.01.2011**
(21) Numéro de dépôt: 06116638.5
(22) Date de dépôt: 05.07.2006
(51) Int. Cl.: H04L 9/00, G01R 31/317, G01R 31/3185

(54) **Protection d'une quantité numérique contenue dans un circuit intégré comportant une interface JTAG**
Kopierschutz von digitalen Daten innerhalb einer integrierte Schaltung mit JTAG Anschluss
Protection of digital data contained within an integrated circuit with a JTAG interface

(30) Priorité: 05.07.2005 FR 0552043
(43) Date de publication de la demande: 10.01.2007
(73) Titulaire: ST MICROELECTRONICS S.A., 92120 Montrouge (FR)
(72) Inventeur: Sozzani, Fabio, 38100, GRENOBLE (FR)
(74) Mandataire: de Beaumont, Michel

(56) Documents cités:
- EP-A- 1 443 338
- US-A1- 2004 117 575
- US-A1- 2004 193 980
- NICK PATAVALIS: "A Brief Introduction to the JTAG Boundary Scan Interface"[Online] 8 novembre 2001 (2001-11-08), XP002375442 Extrait de l'Internet: URL:http://www.inaccessnetworks.com/projec ts/ianjtag/jtag-intro/jtag-intro.html> [extrait le 2006-04-03]

## Description

### Domaine de l'invention

La présente invention concerne de façon générale des circuits intégrés et plus particulièrement les circuits comportant une interface de type JTAG.

L'invention s'applique plus particulièrement à des circuits intégrés destinés à contenir une ou plusieurs quantités numériques que l'on souhaite protéger contre un accès par l'extérieur, notamment des clés utilisées dans des échanges chiffrés ou signés au moyen d'algorithmes de cryptographie.

### Exposé de l'art antérieur

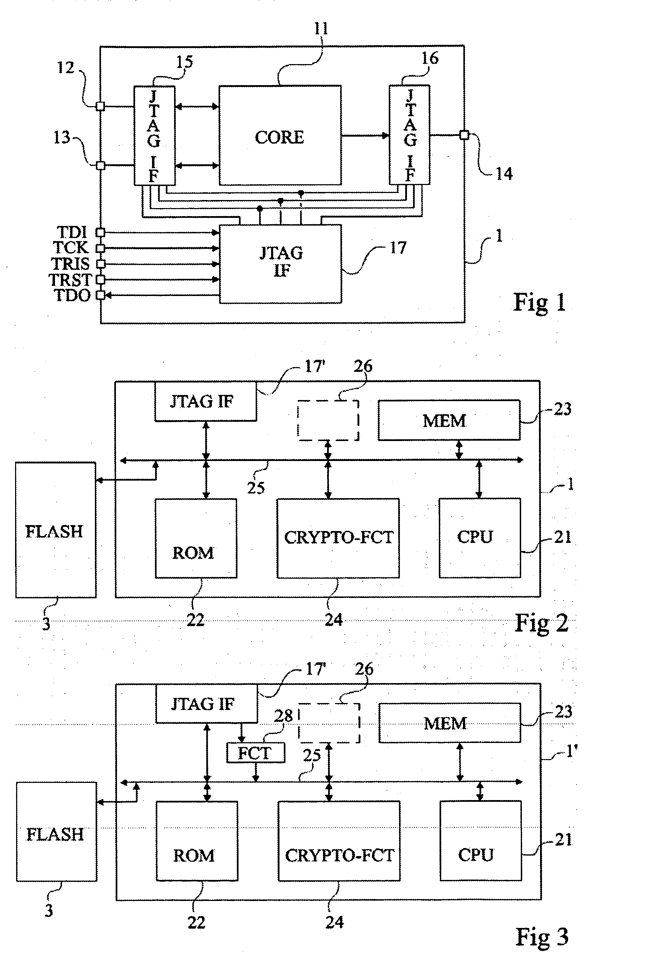

La figure 1 représente, de façon schématique et sous forme de blocs, un exemple de circuit intégré 1 à microcontrôleur du type auquel s'applique la présente invention. Ce circuit comporte une interface JTAG (Joint Test Action Group) dont l'architecture est définie par une norme IEEE 1149 (Standard Test Access Port and Boundary-Scan Architecture). Cette norme définit un protocole série à cinq bornes pour accéder et contrôler des niveaux de signaux sur les bornes d'entrée/sortie d'un circuit numérique. Dans l'exemple représenté en figure 1, le circuit à tester 11 (CORE) communique avec l'extérieur par trois bornes d'entrée/sortie 12, 13 et 14.

Pour simplifier, on considère le cas de trois bornes 12 à 14 mais le microcontrôleur peut comporter de nombreux autres accès.

La structure générale de l'interface JTAG comporte des éléments 15 et 16 d'aiguillage des signaux entre les bornes d'entrée/sortie 12, 13 et 14 et le circuit à tester 11 pour aiguiller les signaux présents sur les bornes d'entrée/sortie soit vers le circuit 11 soit vers un troisième élément 17 de l'interface JTAG (JTAG IF) comprenant notamment des circuits logiques de test. Le circuit 17 communique avec l'extérieur du circuit 1 au moyen de cinq bornes véhiculant des signaux TDI, TCK, TRIS, TRST et TDO du protocole JTAG. Les signaux TDI, TCK, TRIS et TRST correspondent à des entrées respectives de réception de données (TDI), d'un signal d'horloge (TCK), d'un signal (TRIS) de sélection de mode entre le mode test et le mode de fonctionnement normal et d'un signal de réinitialisation (TRST). Le cinquième signal (TDO) correspond à une sortie à destination d'un outil externe d'interprétation du test réalisé.

Par défaut, le circuit 1 est en fonctionnement normal dans lequel les éléments de déviation 15 et 16 sont inopérants, le coeur 11 du circuit 1 communiquant alors avec des bornes d'entrée/sortie 12 à 14. En phase de test, par l'activation du circuit 17, les circuits 15 et 16 d'aiguillage des signaux permettent de rediriger soit des signaux présents à l'entrée des bornes 12 à 14, soit des signaux présents en sortie des bornes du circuit 11, en direction du circuit 17 pour une fourniture à l'extérieur par la borne TDO et une interprétation par les outils de test (non représentés).

Le fonctionnement d'une interface JTAG est connu du standard indiqué ci-dessus et un exemple du circuit de la figure 1 est exposé dans l'article "Brief Introduction to the JTAG Boundary Scan Interface" de Nick Patavalis publié le 8 novembre 2001 sur la page internet http://www.inaccessnetworks.com/ian/projects/ianjtag/jtag-inro/jtag-intro.html.

Un problème lié à l'utilisation d'une interface JTAG est qu'elle constitue un élément susceptible d'accéder à des quantités numériques contenues dans le microcontrôleur 11 que l'on souhaiterait préserver d'un accès par l'extérieur. Il s'agit par exemple de clés de chiffrement, d'authentification, etc. qui sont considérées comme secrètes et devant rester dans le circuit. L'interface JTAG d'un microcontrôleur peut en effet permettre à un fraudeur d'accéder à de telles informations, qu'elles soient contenues dans le circuit intégré lui-même (dans le microcontrôleur) ou dans une mémoire sécurisée externe à celui-ci et avec laquelle il communique par un bus.

La figure 2 est une représentation fonctionnelle d'un exemple de microcontrôleur 1 équipé d'une interface JTAG 17'. Pour simplifier la représentation de la figure 2, les éléments d'aiguillage (15 et 16, figure 1) n'ont pas été illustrés. Le circuit 1 forme un microcontrôleur comportant, par exemple, une unité centrale de traitement 21 (CPU), une mémoire non volatile 22 (ROM) par exemple de type mémoire morte, une mémoire vive 23 (MEM) pour l'exécution des programmes et une fonction cryptographique 24 (CRYPTO-FCT). La fonction 24 est généralement un programme ou un circuit (cryptoprocesseur) manipulant des quantités considérées comme devant rester secrètes que ce soit à des fins de chiffrement, de signature, d'authentification, etc. Les différents constituants du circuit 1 communiquent au moyen d'un bus interne 25 sur lequel transitent des données, des adresses et des commandes. Le bus 25 communique avec l'extérieur par des ports d'entrée/sortie (non représentés). Dans l'exemple de la figure 2, une mémoire flash 3 (FLASH) est reliée au bus 25 par ces ports d'entrée/sortie.

Selon un premier exemple, une clé secrète est contenue dans la mémoire 22 et peut être utilisée par le cryptoprocesseur 24 pour traiter des données secrètes contenues dans la mémoire externe 3. Dans ce cas, la clé secrète transite depuis la mémoire morte 22 vers le processeur 24 à travers le bus 25. Or, ce bus est accessible par l'interface JTAG 17', ce qui introduit une faille potentielle dans la sécurité du système.

Selon un autre exemple, une clé est générée par le microcontrôleur à partir : d'un identifiant contenu par exemple dans l'unité centrale 21 ; d'éléments numériques contenus dans la mémoire morte 22; et d'autres éléments cryptographiques contenus, par exemple, dans un élément additionnel 26 (par exemple, une clé conditionnant des droits d'accès à certaines applications). Là encore, le fait que toutes les quantités passent par le bus 25 accessible par l'interface JTAG 17' fragilise le système du point de vue de la préservation du secret des quantités manipulées.

La demande de brevet européen EP-A-1 443 338 prévoit d'adjoindre à l'interface JTAG un mécanisme d'authentification de l'utilisateur de façon à en contrôler l'accès.

Un premier inconvénient de cette technique est qu'elle nécessite des ressources matérielles importantes.

Un autre inconvénient est qu'elle donne l'accès aux éléments à protéger si l'utilisateur passe le contrôle.

Le document US-A-2004/117575 décrit un système et un procédé pour contrôler l'accès à des données protégées stockées dans une entité de stockage, consistant à n'autoriser l'accès aux données protégées que lorsqu'une clé introduite de l'extérieur et une clé interne sont identiques.

### Résumé de l'invention

La présente invention vise à pallier tout ou partie des inconvénients liés à l'utilisation d'une interface JTAG dans des microcontrôleurs dont certaines informations ne doivent pas être rendues accessibles par un utilisateur ou un fraudeur.

L'invention vise notamment à empêcher la fourniture à l'extérieur du circuit, par l'interface JTAG, d'informations considérées comme devant rester au sein du microcontrôleur.

L'invention vise également à proposer une solution compatible avec la génération d'une clé à l'intérieur du microcontrôleur.

L'invention vise également à proposer une solution compatible avec les interfaces JTAG classiques.

L'invention vise également à proposer une solution requérant peu de ressources matérielles dans le circuit intégré.

Pour atteindre tout ou partie de ces objets ainsi que d'autres, la présente invention prévoit un procédé de protection d'une quantité numérique stockée dans un microcontrôleur comportant une interface JTAG, dans lequel ladite quantité numérique est rendue dépendante d'une valeur stockée de façon non volatile dans le microcontrôleur et rendue inaccessible si des signaux sont présents en entrée de l'interface JTAG.

Selon un mode de mise en oeuvre de la présente invention, ladite valeur constitue un paramètre de génération d'une clé utilisée par une fonction cryptographique du microcontrôleur.

Selon un mode de mise en oeuvre de la présente invention, une deuxième valeur différente de la première est utilisée pour générer la clé de la fonction cryptographique quand des signaux sont présents à l'entrée de l'interface JTAG.

Selon un mode de mise en oeuvre de la présente invention, la protection est désactivée pendant une phase de test utilisant l'interface JTAG.

La présente invention prévoit également un microcontrôleur comportant au moins une unité centrale, un élément de mémorisation non volatil et une interface de type JTAG, comportant en outre des moyens de mise en oeuvre d'une fonction de protection d'une quantité numérique en rendant celle-ci dépendante d'un paramètre accessible uniquement en l'absence de signaux présents en entrée de l'interface JTAG.

Selon un mode de réalisation de la présente invention, une fonction cryptographique utilise une clé dont un paramètre est stocké dans un élément de mémorisation non volatil et n'est accessible qu'en l'absence de signaux en entrée de l'interface JTAG.

Selon un mode de réalisation de la présente invention, ladite fonction est mise en oeuvre au moyen d'un élément de détection de la présence d'un signal en entrée de l'interface JTAG pour conditionner une valeur fournie pour générer ladite clé.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente, de façon très schématique et sous forme de blocs, un mode de réalisation d'un circuit intégré à microcontrôleur et interface JTAG selon la présente invention ;
la figure 4 représente un détail du circuit de la figure 3 ;
les figures 5A et 5B illustrent un mode de mise en oeuvre de la présente invention ; et
la figure 6 représente partiellement une variante du circuit de la figure 4.

Les mêmes éléments ont été désignés par les mêmes références aux différentes figures. Pour des raisons de clarté, seuls les étapes et éléments qui sont utiles à la compréhension de l'invention ont été représentés aux figures et seront décrits par la suite. En particulier, les tâches exécutées par le microcontrôleur contenu dans un circuit intégré de l'invention n'ont pas été détaillées, l'invention étant compatible avec tout microcontrôleur classique. De plus, les destinations des quantités censées rester secrètes au sein du microcontrôleur n'ont pas été détaillées, l'invention étant là encore compatible avec toute utilisation classique d'une quantité numérique censée rester secrète (authentification, signature, chiffrement, etc.).

### Description détaillée

Une caractéristique d'un mode de mise en oeuvre de la présente invention est d'adjoindre, à une quantité numérique contenue dans une mémoire non volatile d'un microcontrôleur d'un circuit comportant une interface JTAG, un paramètre dont la valeur est différente selon le mode de fonctionnement du circuit intégré entre un mode normal et un mode de test exploitant l'interface JTAG.

De préférence, un circuit selon l'invention comporte un élément de mémorisation (par exemple, un registre) dont la valeur change selon que l'interface JTAG a été ou non utilisée pour le test. Cet élément est ensuite utilisé par le microcontrôleur (de façon logicielle ou matérielle) comme un paramètre de clé cryptographique.

La présente invention tire profit du fait qu'à chaque début de test au moyen d'une interface JTAG, l'un des signaux de cette interface se trouve toujours présent. Cela permet non seulement de détecter aisément une tentative d'accès par l'interface JTAG, mais également de mettre à jour la valeur de l'élément de mémorisation pour valider qu'il s'agit ou non d'un test.

L'interface JTAG n'est en elle-même pas modifiée et toutes ses fonctionnalités sont préservées. L'invention se contente d'exploiter une information présente sur un des signaux de l'interface à des fins cryptographiques.

La figure 3 représente, de façon très schématique et sous forme de blocs, par une vue à rapprocher de celle de la figure 2, un mode de réalisation d'un circuit intégré 1' de type microcontrôleur comportant une interface JTAG selon la présente invention.

Comme précédemment, le circuit 1' comporte une unité centrale de traitement 21 (CPU), au moins une mémoire non volatile 22 (par exemple une ROM), au moins une mémoire volatile 23 (MEM), une interface JTAG 17' (JTAG IF) et une fonction cryptographique 24 (CRYPTO-FCT). Dans l'exemple représenté, les différents éléments communiquent par un bus interne 25 dont un circuit d'entrée/sortie (non représenté) est relié à une mémoire externe 3 (FLASH), par exemple de type flash, ou plus généralement à d'autres éléments externes au circuit 1'. Optionnellement et selon le rôle de la clé stockée en mémoire morte 22, un ou plusieurs éléments 26 additionnels sont prévus comme dans le mode de réalisation de la figure 2.

Selon ce mode de réalisation de l'invention, une fonction 28 (FCT) est intercalée entre l'interface JTAG 17' et le reste du système pour générer un paramètre pris en compte dans au moins une quantité numérique censée rester protégée dans le circuit 1. La valeur de cette quantité diffère selon le mode de fonctionnement (normal ou test) JTAG du circuit. Pour faire ressortir que l'invention ne modifie pas le fonctionnement de l'interface JTAG, le bloc 28 est représenté entre l'interface 17' et le bus 25 sans toutefois interférer sur une liaison directe de l'interface 17' au bus 25.

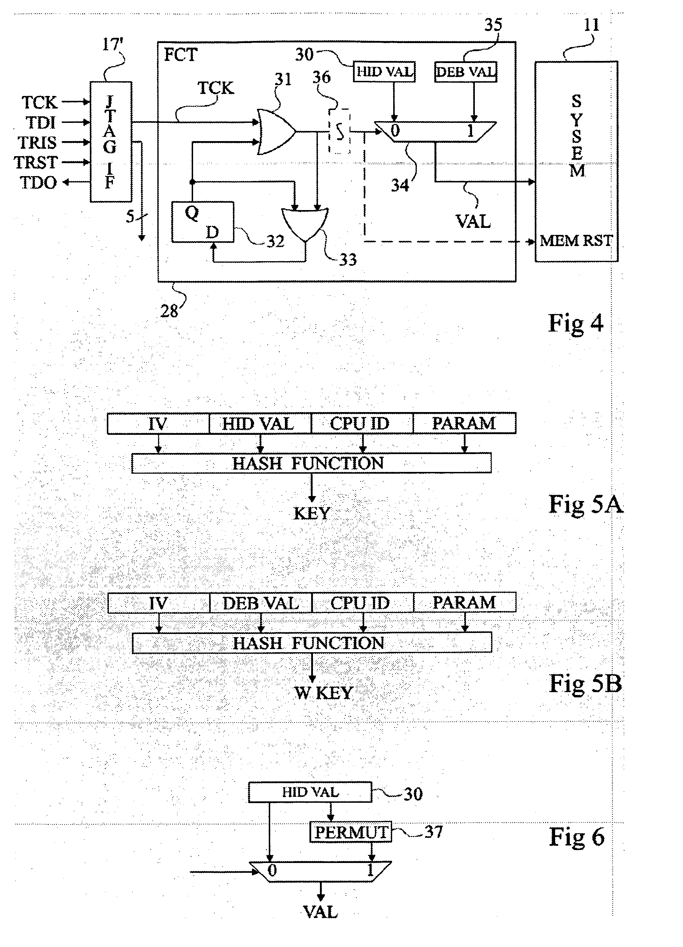

La figure 4 illustre, de façon très schématique et sous forme de blocs, un mode de réalisation de la fonction 28 selon la présente invention. Cette fonction peut être au moins partiellement réalisée de façon logicielle mais requiert un élément 30 de mémorisation d'une valeur (HID VAL) stockée à la fabrication de façon non volatile et dont l'état conditionne, quand le circuit fonctionne en mode normal, l'obtention d'une quantité numérique à protéger correcte (par exemple, une clé de chiffrement et d'authentification). Cela revient à cacher dans le circuit une valeur dont dépendra par la suite l'obtention de clés correctes.

Dans une réalisation matérielle, la fonction 28 comporte, par exemple, un multiplexeur 34 dont une première entrée reçoit la valeur HID-VAL et dont une deuxième entrée reçoit une autre valeur DEB-VAL. La sortie du multiplexeur 34 fournit au système symbolisé par un bloc 11 en figure 4 (typiquement à l'unité centrale 21 ou à la fonction cryptographique matérielle ou logicielle 24) une valeur VAL utilisée pour l'obtention de la quantité numérique à protéger. La sélection entre les entrées du multiplexeur est effectuée en fonction du mode de fonctionnement (normal ou test) du circuit.

Selon un premier mode de mise en oeuvre, l'entrée de commande du multiplexeur est reliée en sortie d'une porte OU 31 dont une première entrée reçoit le signal TCK provenant de l'interface JTAG 17'. Une deuxième entrée de la porte 31 est reliée en sortie de données Q d'une bascule 32 dont l'entrée reçoit le résultat d'une combinaison de type OU (porte 33) de la sortie Q avec la sortie de la porte 31. La valeur VAL fournie au système 11 dépend donc de la présence de signaux en entrée de l'interface JTAG. Dans cet exemple, les éléments 31, 32 et 33 forment un élément de mémorisation d'un bit indicateur de l'utilisation de l'interface JTAG. Cela revient à mémoriser l'apparition d'un front descendant sur le signal TCK.

Lorsque le circuit est alimenté, sans que l'interface JATG soit utilisée, le signal TCK est à l'état bas. Il en découle que la sortie de la porte 31 est à l'état bas (la sortie Q de la bascule 32 étant à l'allumage à l'état bas). La porte 33 et la bascule 32 verrouillent l'état bas en sortie de la porte 31 et le multiplexeur 34 sélectionne la valeur cachée HID-VAL.

Dès que l'interface JTAG est utilisée, un signal d'horloge TCK est présent. Au premier front montant de ce signal, la sortie de la porte 31 bascule à l'état haut et le multiplexeur 34 sélectionne la valeur DEB-VAL. La clé générée est alors une clé non sensible du point de vue de la sécurité. La porte 33 bascule également à l'état haut, ce qui verrouille l'état haut en entrée de la porte 31 et le même état en sortie.

Optionnellement, un élément anti-fusible 36 est intercalé en entrée de commande du multiplexeur 34. Le rôle de cet élément 36 est de permettre une désactivation de la protection pour le cas où le mode test ait besoin de la clé générée dans le circuit intégré, cette clé dépendant de la valeur VAL. Dans ce cas, l'élément 36 est activé (laisse passer le signal) en fin de test pour activer la protection. Dans le cas où le mode de test n'a pas besoin d'utiliser la bonne clé de cryptographie, l'élément anti-fusible 36 n'est pas nécessaire.

De préférence, la valeur HID VAL contenue dans le registre caché 30 est fixée lors de la fabrication par exemple de façon matérielle.

La valeur DEB VAL de l'élément 35 est choisie pour être différente de la valeur cachée de l'élément 30. Par exemple, on prévoira une valeur dont tous les bits sont à zéro ou tous les bits sont à un pour une réalisation la plus simple. Le système peut toujours lire cette valeur mais comme elle est différente de la valeur ayant servie à conditionner la clé utilisée par la fonction cryptographique, il n'est pas possible de générer une clé cryptographie correcte à partir de ce paramètre.

Selon une variante simplifiée, si la valeur représentant la clé est suffisamment grande en nombre de bits, elle peut être utilisée directement sans passer par une fonction de condensat.

Les figures 5A et 5B illustrent la génération d'une clé au moyen d'un circuit selon un mode de réalisation de l'invention.

On suppose qu'une clé KEY utilisée par la fonction cryptographique du microcontrôleur prend en compte un vecteur d'initialisation (IV) contenu, par exemple, en mémoire morte, un identifiant du microcontrôleur (CPU ID) contenu, par exemple dans un élément de mémorisation non volatil du circuit et, optionnellement, un paramètre (PARAM) provenant par exemple du circuit 26 de la figure 3. Ce paramètre correspond, par exemple, à un paramétrage des tâches exécutables par le microcontrôleur qui peuvent être différentes d'une application à une autre.

Selon le mode de réalisation représenté de l'invention, la clé prend également en compte la valeur VAL correspondant soit (figure 5A) à la valeur cachée HID VAL, soit (figure 5B) à la valeur DEB VAL accessible en mode test. Dans le premier cas, la clé KEY générée est correcte et permet au microcontrôleur d'exploiter les données considérées comme confidentielles qu'il contient ou qui sont disponibles dans les mémoires externes auquel il est associé. Dans le cas contraire (figure 5B), la clé générée W KEY est fausse et ne permet pas d'exploiter les données.

La valeur cachée de l'élément 30 n'est disponible qu'après une réinitialisation matérielle du circuit (à l'exception du mode à anti-fusible dans lequel aucune réinitialisation n'est possible).

En variante, le changement de valeur entre les valeurs contenues dans les registres 30 et 35 sert à modifier le statut de la valeur VAL, de lisible à non lisible par le système.

Selon une variante de réalisation, un autre signal que le signal TCK est prélevé sur l'interface de test. Par exemple, on pourra utiliser le signal d'entrée de données TDI qui sera de toute façon utilisé par un fraudeur en cas de besoin d'accès pour tentative de piratage. L'adaptation de la fonction 28 pour qu'elle respecte les fonctionnalités décrites est à la portée de l'homme du métier avec des moyens logiciels et des circuits logiques.

Selon une autre variante de réalisation, le signal de sortie de la porte 31 sert également à une réinitialisation de la mémoire de données (MEM RST) du microcontrôleur. Ce fonctionnement optionnel est illustré par un pointillé en figure 4. Il sert par exemple si des données sensibles sont susceptibles d'être présentes en mémoire vive pendant le fonctionnement du système. Selon cette variante, le signal de réinitialisation de mémoire est prélevé en aval de l'élément anti-fusible 36 pour n'être activé que lorsque le système de protection est lui-même activé.

La figure 6 illustre un deuxième mode de réalisation de l'invention dans lequel la valeur VAL fournie au système 11 sélectionnée par le multiplexeur 34 est soit la valeur HID VAL contenue dans le registre 30, soit cette valeur transformée par exemple, ayant subi une permutation au moyen d'un élément 37.

Un avantage de la présente invention est qu'elle rend inefficaces des tentatives d'accès à un composant par son interface JTAG dans le but de pirater des quantités censées rester secrètes.

Dans son mode de réalisation préféré, l'invention tire profit du fait que la plupart des systèmes utilisant des clés exploitent des fonctions de condensat (hash function) qui ont pour propriété de fournir un résultat différent dès qu'une valeur ou un paramètre de génération de la clé est différent.

Un avantage de l'invention est qu'un éventuel fraudeur ne s'aperçoit pas que la clé générée est incorrecte et le microcontrôleur fonctionne donc de façon apparemment normale sans pour autant fournir les éléments considérés comme devant rester secrets.

Un autre avantage de la présente invention est que sa mise en oeuvre ne requiert pas de modifications matérielles importantes. Au minimum, un élément de mémorisation non volatil pour stocker la valeur cachée HID VAL est requis.

Un autre avantage de la présente invention est qu'elle fournit un moyen de génération d'une clé susceptible d'être utilisée par la fonction cryptographique (matérielle ou logicielle) du microcontrôleur.

Bien entendu, la présente invention est susceptible de diverses variantes et modifications qui apparaîtront à l'homme de l'art. En particulier, le choix du signal provenant de l'interface JTAG à exploiter pour activer la protection est à la portée de l'homme du métier en fonction du circuit de détection prévu. De plus, l'exploitation de cette détection que ce soit pour la génération d'une fausse clé ou pour interdire la lecture par d'autres moyens dans le microcontrôleur dépend de l'application et est à la portée de l'homme du métier. En outre, la mise en oeuvre logicielle et/ou matérielle de l'invention à partir des indications fonctionnelles données ci-dessus est à la portée de l'homme du métier.

## Revendications

1. Procédé de protection d'une quantité numérique stockée dans un microcontrôleur (1) comportant une interface JTAG (17'), **caractérisé en ce qu'**il consiste à rendre ladite quantité numérique dépendante d'une valeur stockée de façon non volatile dans le microcontrôleur et rendue inaccessible si des signaux sont présents en entrée de l'interface JTAG.

2. Procédé de protection selon la revendication 1, dans lequel ladite valeur (HID VAL) constitue un paramètre de génération d'une clé (KEY) utilisée par une fonction cryptographique (24) du microcontrôleur.

3. Procédé de protection selon la revendication 2, dans lequel une deuxième valeur (DEB VAL) différente de la première est utilisée pour générer la clé de la fonction cryptographique quand des signaux sont présents à l'entrée de l'interface JTAG.

4. Procédé de protection selon l'une quelconque des revendications 1 à 3, dans lequel la protection est désactivée pendant une phase de test utilisant l'interface JTAG.

5. Microcontrôleur (1) comportant au moins une unité centrale (21), un élément de mémorisation non volatile (22) et une interface de type JTAG (17'), **caractérisé en ce qu'**il comporte des moyes de protection (18) d'une quantité numérique (KEY) stockée dans ce microcontrôleur, ces moyens comportant :
des moyens (30) de stockage non volatil d'une valeur (HID-VAL) ;
les moyens de protection étant adaptés à rendre accessible cette valeur uniquement en l'absence de signaux présents en entrée de l'interface JTAG ; et
à rendre ladite quantité dépendante d'un paramètre (VAL) fonction de ladite valeur.

6. Microcontrôleur selon la revendication 5, dans lequel une fonction cryptographique (24) configurée pour utiliser une clé (KEY) dont un paramètre (VAL) est stocké dans un élément de mémorisation non volatile (30) et n'est accessible qu'en l'absence de signaux en entrée de l'interface JTAG.

7. Microcontrôleur selon la revendication 5, dans lequel ladite fonction est mise en oeuvre au moyen d'un élément (31) de détection de la présence d'un signal en entrée de l'interface JTAG pour conditionner une valeur (VAL) fournie pour générer ladite clé.

## Claims

1. A method for protecting a digital quantity stored in a microcontroller (1) comprising a JTAG interface (17'), **characterized in that** it consists in making said digital quantity dependent on a value stored in non-volatile fashion in the microcontroller and made inaccessible if signals are present at the input of the JTAG interface.

2. The protection method of claim 1, wherein said value (HID VAL) is a parameter of generation of a key (KEY) used by a cryptographic function (24) of the microcontroller.

3. The protection method of claim 2, wherein a second value (DEB VAL) different from the first one is used to generate the key of the cryptographic function when signals are present at the input of the JTAG interface.

4. The protection method of any of claims 1 to 3, wherein the protection is deactivated in a test phase using the JTAG interface.

5. A microcontroller (1) comprising at least a central processing unit (21), a non-volatile storage element (22), a JTAG-type interface (17'), **characterized in that** it comprises means (28) for protecting a digital quantity (KEY) stored in the microcontroller, said means comprising:
means (30) for non-volatile storing of a value (HID-VAL) ;
the protection means being adapted to make said value accessible only in the absence of signals present at the input of the JTAG interface, and for making said quantity dependent on a parameter (VAL) that is a function of said value.

6. The microcontroller of claim 5, wherein a cryptographic function (24) adapted to use a key (KEY) having a parameter (VAL) is stored in a non-volatile storage element (30) and isonly accessible in the absence of signals at the input of the JTAG interface.

7. The microcontroller of claim 5, wherein said function is implemented by means of an element (31) of detection of the presence of a signal at the input of the JTAG interface to condition a value (VAL) provided to generate said key.

## Patentansprüche

1. Ein Verfahren zum Schützen einer digitalen Größe, gespeichert in einem Microcontroller (1), der ein JTAG-Interface (17') aufweist, **gekennzeichnet dadurch, dass** es besteht aus Abhängigmachen der digitalen Größe von einem Wert, gespeichert in einer nicht-flüchtigen Weise in dem Microcontroller und unzugänglich gemacht, falls Signale an dem Eingang von dem JTAG-Interface vorhanden sind.

2. Schutzverfahren nach Anspruch 1, wobei der Wert (HID VAL) ein Parameter zum Erzeugen eines Schlüssels (KEY) ist, der durch eine kryptographische Funktion (24) von dem Microcontroller verwendet wird.

3. Schutzverfahren nach Anspruch 2, wobei ein zweiter Wert (DEB VAL), der verschieden von dem ersten Wert ist, verwendet wird zum Erzeugen des Schlüssels von der kryptographischen Funktion, wenn Signale an dem Eingang von dem JTAG-Interface vorhanden sind.

4. Schutzverfahren nach irgendeinem der Ansprüche 1 bis 3, wobei der Schutz in einer Testphase unter Verwendung von dem JTAG-Interface deaktiviert ist.

5. Ein Microcontroller (1), der wenigstens eine zentrale Verarbeitungseinheit (21), ein nicht-flüchtiges Speicherelement (22), ein JTAG-artiges Interface (17') aufweist, **gekennzeichnet dadurch, dass** er Mittel (28) aufweist zum Schützen einer digitalen Größe (KEY), gespeichert in dem Microcontroller, wobei die Mittel aufweisen:
Mittel (30) zum nicht-flüchtigen Speichern eines Wertes (HID-VAL);
die Schutzmittel angepasst sind um den Wert nur erreichbar zu machen beim Fehlen von Signalen, die an dem Eingang von dem JTAG-Interface vorhanden sind, und zum Abhängigmachen der Größe von einem Parameter (VAL), der eine Funktion von dem Wert ist.

6. Microcontroller nach Anspruch 5, wobei eine kryptographische Funktion (24) angepasst ist zum Verwenden eines Schlüssels (KEY), der einen Parameter (VAL) besitzt, der in einem nicht-flüchtigen Speicherelement (30) gespeichert ist und nur erreichbar ist beim Fehlen von Signalen an dem Eingang von dem JTAG-Interface.

7. Microcontroller nach Anspruch 5, wobei die Funktion implementiert ist mittels eines Elements (31) zum Detektieren der Präsenz von einem Signal an dem Eingang von dem JTAG-Interface um einen Wert (VAL) zu konditionieren, der vorgesehen ist zum Erzeugen des Schlüssels.
